# FASCICULE DE BREVET EUROPEEN

(11) **EP 2 877 805 B1**
(45) Date de publication et mention de la délivrance du brevet: **19.02.2020**
(21) Numéro de dépôt: 13739685.9
(22) Date de dépôt: 18.07.2013
(51) Int. Cl.: F28F 9/02, F28F 9/00, F02B 29/04, F28D 7/16, F28D 9/00

(54) **COLLECTEUR POUR ECHANGEUR DE CHALEUR ET ECHANGEUR DE CHALEUR COMPRENANT UN TEL COLLECTEUR**
SAMMELKASTEN FÜR WÄRMETAUSCHER UND WÄRMETAUSCHER MIT EINEM SOLCHEN SAMMLEKASTEN
HEADER BOX FOR HEAT EXCHANGER AND HEAT EXCHANGER COMPRISING SUCH A HEADER BOX

(30) Priorité: 24.07.2012 FR 1257152
(43) Date de publication de la demande: 03.06.2015
(73) Titulaire: Valeo Systèmes Thermiques, 78321 Le Mesnil Saint-Denis Cedex (FR)
(72) Inventeur: ODILLARD, Laurent, F-72390 Le Luart (FR); GROSJEAN, Denis, F-92190 Meudon (FR)
(74) Mandataire: Metz, Gaëlle
(86) Numéro de dépôt international: PCT/EP2013/065238
(87) Numéro de publication internationale: WO 2014/016203

(56) Documents cités:
- EP-A1- 1 801 407
- DE-A1-102008 018 594
- US-A1- 2011 011 376

## Description

L'invention concerne un collecteur pour échangeur de chaleur, un boîtier d'échangeur de chaleur comprenant un tel collecteur et un échangeur de chaleur comprenant un tel boîtier. Il pourra en particulier s'agir d'un refroidisseur d'air de suralimentation, notamment un module d'admission de gaz d'admission d'un moteur à combustion interne. Par gaz d'admission, il faut entendre l'air et/ou un mélange d'air et de gaz d'échappement.

Il est connu de réaliser un refroidissement des gaz d'admission par un échange de chaleur entre les gaz d'admission et un liquide de refroidissement. L'échangeur thermique employé à cette fin comprend un boîtier qui guide les gaz d'admission à travers un faisceau d'échange de chaleur parcouru par le liquide de refroidissement. Un tel'échangeur thermique est connu de EP 1 801 407 A1 ou DE 10 2008 018 597 A1, représentant la préambule de la revendication 1.

Il a tout d'abord été utilisé des boîtiers en matériau plastique. Il ressort cependant que ce type de boîtier ne résiste pas aux températures élevées qui peuvent être rencontrées lorsque le moteur à combustion interne est équipé d'un turbocompresseur et/ou lorsque le moteur à combustion interne utilise le diesel comme carburant.

Il a également été envisagé des boîtiers métalliques réalisés à partir de plaques brasées les unes aux autres. Le collecteur de l'échangeur est alors muni d'une bride de connexion à une alimentation en gaz d'admission. Ladite bride est réalisée par une pièce de fonderie, usinée afin de présenter les formes lui permettant de remplir son rôle d'interface entre l'alimentation en gaz d'admission et l'échangeur de chaleur.

On conçoit aisément qu'une telle pièce présente de nombreux inconvénients, en particulier dus à son épaisseur, sa masse et/ou son coût de revient. Il est encore à noter que son assemblage avec l'échangeur de chaleur est rendu d'autant plus complexe qu'il nécessite des opérations de soudage spécifiques.

La présente invention a pour but de résoudre les inconvénients décrits ci-dessus et concerne un collecteur d'échangeur thermique, notamment refroidisseur d'air de suralimentation d'un moteur à combustion interne, comprenant un faisceau d'échange de chaleur entre un premier et un second fluide, ledit collecteur comprenant une bride de connexion pour le passage du premier fluide et une boîte de circulation dudit premier fluide entre ladite bride et ledit faisceau d'échange de chaleur, ladite boîte comprenant un assemblage d'un bord relevé d'une paroi, dite d'entrée, de ladite boîte, supportant ladite bride, et d'au moins une autre paroi de ladite boîte, ladite bride comprenant une nervure de renfort prenant appui sur ledit assemblage.

On dispose ainsi d'une bride présentant une rigidité satisfaisante par l'effet conjugué de l'utilisation de ladite nervure de renfort et de la prise d'appui de ladite nervure sur une partie de la boîte présentant une épaisseur de matière renforcée car conjuguant deux parois de ladite boîte.

Selon différents mode de réalisation de l'invention qui pourront être pris ensemble ou séparément :
- ladite nervure est configurée pour définir une gorge destinée à accueillir un joint d'étanchéité,
- ladite bride est formée d'une pièce emboutie,
- ladite bride est revêtue d'un revêtement de brasage, au moins sur l'une de ses faces,
- ladite autre paroi est une paroi, par exemple supérieure et/ou inférieure, de ladite boîte, destinée à être orientée selon un plan sensiblement parallèle à des plaques du faisceau d'échange de chaleur dudit échangeur de chaleur,
- ladite autre paroi est un bord relevé d'une paroi, par exemple latérale, de ladite boîte, destinée à être orientée selon un plan sensiblement perpendiculaire auxdites plaques,
- ladite bride présente un plan d'interface avec une pièce de connexion, permettant la circulation du premier fluide, ledit plan étant orienté sensiblement orthogonalement audit bord relevé de la face d'entrée et/ou à ladite autre paroi formant l'assemblage,
- ledit plan d'interface s'étend de part et/ou d'autre de ladite nervure de renfort,
- ladite bride présente une épaisseur sensiblement identique à l'épaisseur de ladite paroi d'entrée et/ou de ladite autre paroi,
- ladite bride présente un bord relevé périphérique,
- ladite nervure de renfort prend appui sur ledit bord relevé de la paroi d'entrée,
- ladite bride présente une zone de brasage sur ladite paroi d'entrée,
- ladite zone de brasage est un collet, dit interne, venant en emboitement dans un collet, dit externe, de la paroi d'entrée,
- ledit collet interne est prolongé par un déflecteur,
- ladite bride comprend des bossages de passage de moyens de fixation.

L'invention concerne également un boîtier d'échangeur de chaleur comprenant un collecteur tel que décrit plus haut.

Avantageusement, ledit boîtier comprend des parois définissant un logement pour ledit faisceau d'échange de chaleur, la ou lesdites autres parois du collecteur étant formées par une extension issue de matière desdites parois définissant un logement pour ledit échangeur. On forme de la sorte le boîtier de l'échangeur avec un nombre réduits de pièces ce qui facilite son assemblage.

Selon un aspect de l'invention, lesdites parois pourront elles aussi être réalisées par emboutissage.

L'invention concerne encore un échangeur de chaleur, notamment module d'admission d'air d'un moteur à combustion interne, comprenant un boîtier tel que décrit plus haut.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un exemple de réalisation d'un boîtier d'admission selon l'invention,
- la figure 2 est une vue en perspective éclatée d'après la figure 1, selon un autre angle de vue,
- la figure 3 est une vue en perspective d'une partie du collecteur du boîtier de la figure 1, selon un plan de coupe repéré III-III à cette figure.

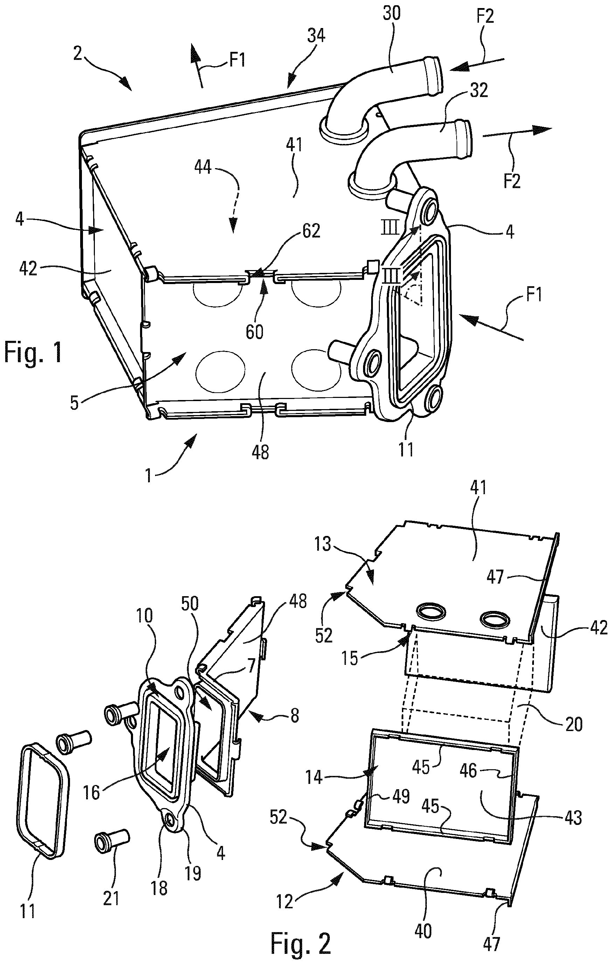

Comme illustré aux figures 1 et 2, l'invention concerne tout d'abord un collecteur 1 d'un échangeur thermique 2, permettant un échange de chaleur entre un premier fluide F1 et un second fluide F2. Ledit collecteur 1 sert ici de collecteur d'entrée, c'est-à-dire, de collecteur permettant de distribuer le premier fluide F1 entrant dans l'échangeur de chaleur 2 vers un faisceau 20 d'échange de chaleur disposé dans un boîtier 4 dudit échangeur de chaleur. Dans une variante non-illustrée, il pourra également servir de collecteur de sortie, c'est-à-dire de collecteur permettant de diriger le premier fluide F1 sortant de l'échangeur 2 après avoir traversé ledit faisceau 20 d'échange de chaleur.

Ledit faisceau 20 est ici illustré de façon schématique en pointillé. De façon connue de l'homme de l'art, il pourra comprendre des plaques empilées selon une direction d'empilement. Lesdites plaques définissent alternativement, selon la direction d'empilement, des conduits de circulation du premier fluide F1 et du second fluide F2. Ledit faisceau est assujetti audit boîtier 4, par exemple, par des bords latéraux opposés des plaques et/ou par des faces de plaques d'extrémité dudit faisceau.

Le fluide F2 rentre ici dans l'échangeur par une première tubulure 30 liée au boîtier 4 et parcoure des conduits définis par deux plaques voisines d'une même paire de plaques, lesdites paires de plaque étant reliées entre elles pour la circulation dudit second fluide F2 qui ressort de l'échangeur par une seconde tubulure 32. Ledit fluide F1 rentre par le collecteur 1 et traverse ensuite le faisceau 20 en passant entre deux plaques en vis-à-vis de deux paires de plaques voisines, avant de sortir de l'échangeur par une sortie 34 dudit boîtier 4.

En variante ledit fluide F2 pourra circuler dans l'échangeur à partir de boîtes collectrices, communiquant avec les conduits définis par les plaques du faisceau à travers une plaque collectrice définissant l'un des côtés dudit boîtier 4.

Ledit collecteur 1 comprend une bride de connexion 4 pour le passage du premier fluide et une boîte de circulation 5 dudit premier fluide F1 entre ladite bride 4 et ledit faisceau 20 d'échange de chaleur de l'échangeur de chaleur 2. Ladite bride de connexion 4 est destinée à relier l'échangeur à des pièces de connexion, non illustrées, permettant la circulation dudit premier fluide F1 en amont et/ou en aval de l'échangeur, dites dans la suite pièces de connexion du premier fluide F1.

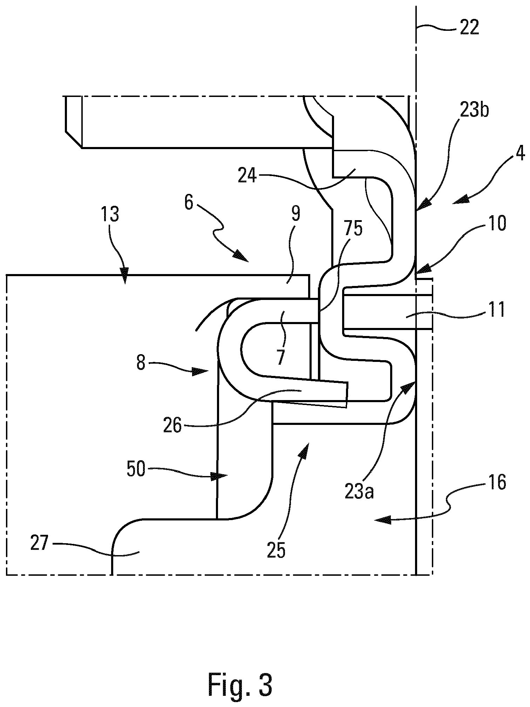

Comme cela est mieux visible à la figure 3, ladite boîte 5 comprend un assemblage 6 d'un bord relevé 7 d'une paroi 8, dite d'entrée, de ladite boîte 5, supportant ladite bride 4, et d'au moins une autre paroi 9 de ladite boîte 5. Ladite bride 4 comprend en outre une nervure de renfort 10 prenant appui sur ledit assemblage 6, ici en particulier sur ledit bord relevé 7 de la paroi d'entrée 8 et encore plus particulièrement sur la tranche 7' dudit bord relevé 7.

On dispose de la sorte d'une bride 4 qui, sans être d'épaisseur importante ni sans s'appuyer sur une partie l'échangeur se trouvant au droit de son faisceau, pourra offrir une rigidité satisfaisante, en particulier une rigidité lui permettant de résister aux efforts de montage desdites pièces de connexion du premier fluide F1 et/ou aux efforts subis en fonctionnement. En effet, en conférant une nervure de renfort 10 à la bride 4, on assure un premier effet de rigidité, effet renforcé en donnant pour appui à ladite nervure 10 une partie 9 de la boîte 5 présentant une résistance renforcée par assemblage de deux ses parois 8, 9.

Ladite bride 4 est réalisée, notamment, sous la forme d'une pièce emboutie, à partir d'un feuillard. Ladite nervure de renfort 10 est définie par déformation du feuillard et non par réduction de son épaisseur. Ladite bride 4 présente avantageusement une épaisseur sensiblement identique à l'épaisseur de ladite paroi d'entrée 8 et/ou de ladite autre paroi 9.

Ladite bride 4 pourra en outre présenter un revêtement de brasage. Son assemblage sur la boîte de circulation 5 est de la sorte facilité.

Ladite nervure de renfort 10 est définie, par exemple, par une gorge destinée à accueillir un joint d'étanchéité 11, servant à assurer l'étanchéité de la liaison entre ladite bride 4 et lesdites pièces de connexion du premier fluide F1. On donne ainsi à ladite nervure 10 un double rôle de renfort et de logement pour le joint 11. Ladite gorge présente ici un profil en U, le fond de la nervure en U prenant appui sur l'assemblage 6.

Ladite bride 4 pourra présenter un plan d'interface 22 avec la ou les pièces de connexion du premier fluide F1. Ledit plan 22 est orienté sensiblement orthogonalement audit bord relevé 7 de la paroi d'entrée 8 et/ou à ladite autre paroi 9 formant l'assemblage 6. Ledit plan d'interface 22 s'étend, par exemple, de part et/ou d'autre de ladite nervure de renfort 10, au niveau de deux surfaces planes 23a, 23b.

Au niveau de sa périphérie, ladite bride 4 pourra en outre présenter un bord relevé 24. Il est ici orienté dans la même direction que des flancs latéraux de ladite nervure de renfort 10.

Ladite bride 4 pourra en outre comprendre une zone de brasage 25 sur ladite paroi d'entrée 8. Ladite zone de brasage 25 est un collet, dit interne, venant en emboitement dans un collet 26, dit externe, de ladite paroi d'entrée 8, le collet interne 25 venant avantageusement en appui plan sur plan sur ledit collet externe 26. Ledit collet interne 25 borde ledit orifice de passage 16 de la bride et/ou ledit collet externe borde un orifice de passage 50 de la paroi d'entrée 5. Ledit collet interne 25 pourra être prolongé par un déflecteur 27, favorisant l'écoulement dudit premier fluide F1.

Si l'on se reporte de nouveau aux figures 1 et 2, on constate que ladite boite de circulation 5 pourra comprendre, outre ladite paroi d'entrée 8, une face inférieure 12 et une face supérieure 13, ici parallèles, les appellations de supérieure et d'inférieure étant uniquement liées à leur orientation sur le dessin et ne présageant pas de leur orientation en utilisation. Ladite boîte de circulation 5 comprend également deux faces latérales 14, 15 reliant lesdites faces supérieure et inférieure. Lesdites faces inférieure 12, supérieure 13 et latérales 15 définissent, d'un côté, une ouverture de passage du fluide F1 vers ledit faisceau d'échange de chaleur 20. Elles sont fermées de l'autre par ladite paroi d'entrée 8 qui forme de la sorte un couvercle de ladite boîte de circulation 5.

Le couvercle formé par ladite paroi d'entrée 8 est ici sensiblement en forme de dièdre comprenant une première face 48, borne, et une deuxième face munie dudit orifice de passage 50 du premier fluide F1. Ledit bord relevé 7 de ladite paroi d'entrée 8 pourra être périphérique de sorte à être en contact plan sur plan avec lesdites faces inférieure, supérieure et latérales de ladite boîte de circulation 5. Ils définissent ainsi ledit assemblage sur lequel la nervure de renfort 10 de la bride 4 prend appui.

Autrement dit, comme illustré, ladite autre paroi 9 dudit assemblage 6 pourra être la face inférieure 12 et/ou supérieure 13 de ladite boîte 5, c'est-à-dire une paroi de ladite boîte 5 destinée à être orientée selon un plan sensiblement parallèle aux plaques du faisceau 20 d'échange de chaleur. Ladite autre paroi 9 pourra encore être un bord relevé 49 de l'une ou et/ou l'autre des faces latérales 14, 15 de ladite boîte 5, c'est-à-dire, une paroi de ladite boîte destinée à être orientée selon un plan sensiblement perpendiculaire aux plaques dudit faisceau 20 d'échange de chaleur.

Ladite bride 4 est sensiblement de forme annulaire et présente un orifice 16 de passage du premier fluide F1 définissant ici l'entrée dudit premier fluide F1 dans l'échangeur, ledit orifice de passage 16 de la bride étant en correspondance de l'orifice de passage 50 de la paroi d'entrée 8. Ladite nervure de renfort 10 est continue le long de l'anneau formé par ladite bride 4. Lesdites surfaces planes 23a, 23b de ladite bride 4, s'étendant ici concentriquement le long de ladite nervure de renfort 10. Ledit joint 11 est annulaire et configuré pour être logé dans ladite nervure de renfort 11.

Ladite bride 4 pourra en outre comprend des orifices de passages 18 de moyens de fixation desdites pièces de connexion du premier fluide F1. Lesdits orifices de passages sont situés, par exemple, au niveau de bossages 19. Lesdits moyens de fixation sont ici constitués d'écrous 21.

L'invention concerne également un boîtier d'échangeur de chaleur tel que celui déjà décrit plus haut.

Ledit boîtier 4 comprend des parois 40, 41, 42, 43 définissant un logement 44 pour ledit faisceau d'échange de chaleur 20. Il comprend ici une paroi inférieure 40 et une paroi supérieure 41, ici parallèles, les appellations de supérieure et d'inférieure étant uniquement liées à leur orientation sur le dessin et ne présageant pas de leur orientation en utilisation. Elles sont sensiblement parallèles aux plaques dudit faisceau 20. Ledit boîtier 4 comprend également deux parois latérales 42, 43 reliant lesdites parois supérieure et inférieure. Elles sont sensiblement perpendiculaires aux plaques 20 dudit faisceau. Lesdites parois 40, 41, 42, 43 du boîtier 4 sont réalisées, par exemple, par emboutissage, de même que ledit couvercle 8.

Lesdites parois latérales sont munies de bords relevés 45 pour permettre un assemblage plan sur plan avec lesdites parois supérieur et inférieur. Elles pourront également être munies d'un bord relevé 46 du côté de ladite sortie 34 de l'échangeur. Du même côté, lesdites plaques inférieure 40 et supérieure 41 sont ici munies d'un bord relevé 47, facilitant l'assemblage avec la pièce sur laquelle ledit échangeur est destiné à être monté.

De l'autre côté du boîtier 4, la ou lesdites autres parois 9 du collecteur 1, c'est-à-dire ici les faces inférieure 12, supérieure 13 et latérales 14, 15 dudit collecteur 1, sont avantageusement formées par une extension issue de matière desdites parois 40, 41, 42, 43 du boîtier 4.

Autrement dit, dans ce mode de réalisation, la boîte de circulation 5 n'est pas formée par une pièce indépendante rapportée sur le boîtier 4 mais d'une part, par ladite paroi d'entrée 8 formant couvercle et, d'autre part par les extensions des parois inférieure 40, supérieure 41 et latérales 42, 43 du boîtier 4 définissant respectivement les faces inférieure 12, supérieure 13 et latérales 14, 15 dudit collecteur 1. Lesdites parois inférieur 40 et supérieur 41 du boîtier présentent ici des extrémités en pointe 52 pour épouser le profil du dièdre formé par ladite paroi d'entrée 8.

Lesdites parois 40, 41, 42, 43 du boîtier 4 et/ou ladite paroi d'entrée 8 pourront présenter des découpes 60 et projections 62 venant en correspondance pour faciliter un préassemblage dudit boîtier collecteur 1 et/ou dudit boîtier 4.

Ledit faisceau 20, lesdites parois 40, 41, 42, 43 du boîtier 4 et/ou ladite paroi d'entrée 8 du collecteur 1 sont réalisées, par exemple, en aluminium et/ou alliage d'aluminium, de même que ladite bride 4. Ledit faisceau 20, lesdites parois 40, 41, 42, 43 du boîtier 4, ladite paroi d'entrée 8 et/ou ladite bride 4 pourront être assemblées entre elles par brasage.

Selon un aspect de l'invention, ledit échangeur de chaleur 3 est un module d'admission d'air d'un moteur à combustion interne, ladite sortie 34 de l'échangeur étant destinée à être montée sur une culasse du moteur. En entrée, les pièces de connexion destinées à être reliées à ladite bride 4 sont, par exemple, des conduits de circulation des gaz d'admission et/ou des vannes doseuses desdits gaz. Bien naturellement, une telle application n'est pas limitative et l'invention pourra trouver son application dans d'autres types d'échangeur.

## Revendications

1. Collecteur d'échangeur thermique, notamment refroidisseur d'air de suralimentation d'un moteur à combustion interne, comprenant un faisceau (20) d'échange de chaleur entre un premier et un second fluide, ledit collecteur (1) comprenant une bride (4) de connexion pour le passage du premier fluide et une boîte de circulation (5) dudit premier fluide entre ladite bride (4) et ledit faisceau d'échange de chaleur (20), ladite boîte (5) comprenant un assemblage (6) d'un bord relevé (7) d'une paroi (8), dite d'entrée, de ladite boîte (5), supportant ladite bride (4), et d'au moins une autre paroi (9) de ladite boîte (5), **caractérisé en ce que** ladite bride (4) comprenant une nervure de renfort (10) prenant appui sur ledit assemblage (6) sur une partie de la boîte présentant une épaisseur de matière renforcée conjuguant deux parois de ladite boîte.

2. Collecteur selon la revendication 1 dans lequel ladite nervure (10) est configurée pour définir une gorge destinée à accueillir un joint d'étanchéité (11).

3. Collecteur selon l'une quelconque des revendications 1 ou 2 dans lequel ladite bride (4) est formée d'une pièce emboutie.

4. Collecteur selon l'une quelconque des revendications 1 à 3 dans lequel ladite autre paroi (9) est une paroi de ladite boîte (5) destinée à être orientée selon un plan sensiblement parallèle à des plaques du faisceau d'échange de chaleur (20) dudit échangeur de chaleur.

5. Collecteur selon l'une quelconque des revendications 1 à 3 dans lequel ladite autre paroi (9) est un bord relevé (49) d'une paroi de ladite boîte (5) destinée à être orientée selon un plan sensiblement perpendiculaire à des plaques du faisceau d'échange de chaleur (20) dudit échangeur de chaleur.

6. Collecteur selon l'une quelconque des revendications précédentes dans lequel ladite bride (4) présente un plan d'interface (22) avec une pièce de connexion, permettant la circulation du premier fluide, ledit plan (22) étant orienté sensiblement orthogonalement audit bord relevé (7) de la face d'entrée (8) et/ou à ladite autre paroi (9) formant l'assemblage (6).

7. Collecteur selon la revendication précédente dans lequel ledit plan d'interface (22) s'étend de part et/ou d'autre de ladite nervure de renfort (10).

8. Collecteur selon l'une quelconque des revendications précédentes dans lequel ladite bride (4) présente une épaisseur sensiblement identique à l'épaisseur de ladite paroi d'entrée (8) et/ou de ladite autre paroi (9).

9. Collecteur selon l'une quelconque des revendications précédentes dans lequel ladite nervure de renfort (10) prend appui sur ledit bord relevé (7) de la paroi d'entrée (8).

10. Collecteur selon l'une quelconque des revendications précédentes dans lequel ladite bride (4) présente une zone de brasage sur ladite paroi d'entrée (8).

11. Collecteur selon l'une quelconque des revendications précédentes dans lequel ladite zone de brasage est un collet (25), dit interne, venant en emboîtement dans un collet (26), dit externe, de la paroi d'entrée (8).

12. Boîtier d'échangeur de chaleur comprenant un collecteur (1) selon l'une quelconque des revendications précédentes.

13. Boîtier selon la revendication 12 comprenant des parois (40, 41, 42, 43) définissant un logement pour ledit faisceau d'échange de chaleur (20), la ou lesdites autres parois (9) du collecteur (1) étant formées par une extension (12, 13, 14, 15) issue de matière desdites parois définissant un logement pour ledit échangeur.

14. Boîtier selon la revendication 13, dans lequel lesdites parois (40, 41, 42, 43, 8) sont réalisées par emboutissage.

15. Echangeur de chaleur, notamment module d'admission d'air d'un moteur à combustion interne, comprenant un boîtier (4) selon l'une quelconque des revendications 12 à 14.

## Patentansprüche

1. Sammelkasten eines Wärmetauschers, insbesondere Ladeluftkühler eines Verbrennungsmotors, welcher ein Rohrbündel (20) zum Wärmeaustausch zwischen einem ersten und einem Fluid umfasst, wobei der Sammelkasten (1) einen Verbindungsflansch (4) für den Durchfluss des ersten Fluids und einen Kasten zur Zirkulation (5) des ersten Fluids zwischen dem Flansch (4) und dem Wärmetauscherbündel (20) umfasst, wobei der Kasten (5) eine Anordnung (6) aus einem hochstehenden Rand (7) einer Wand (8), Eintrittswand genannt, des Kastens (5), die den Flansch (4) stützt, und wenigstens einer weiteren Wand (9) des Kastens (5) umfasst, **dadurch gekennzeichnet, dass** der Flansch (4) eine Verstärkungsrippe (10) umfasst, die sich auf der Anordnung (6) auf einem Teil des Kastens abstützt, der eine verstärkte Materialdicke aufweist, indem er zwei Wände des Kastens vereinigt.

2. Sammelkasten nach Anspruch 1, wobei die Rippe (10) dafür ausgelegt ist, eine Nut zu definieren, die dazu bestimmt ist, einen Dichtungsring (11) aufzunehmen.

3. Sammelkasten nach einem der Ansprüche 1 oder 2, wobei der Flansch (4) von einem Tiefziehteil gebildet wird.

4. Sammelkasten nach einem der Ansprüche 1 bis 3, wobei die weitere Wand (9) eine Wand des Kastens (5) ist, die dazu bestimmt ist, in einer Ebene ausgerichtet zu werden, die im Wesentlichen parallel zu Platten des Wärmetauscherbündels (20) des Wärmetauschers ist.

5. Sammelkasten nach einem der Ansprüche 1 bis 3, wobei die weitere Wand (9) ein hochstehender Rand (49) einer Wand des Kastens (5) ist, die dazu bestimmt ist, in einer Ebene ausgerichtet zu werden, die im Wesentlichen senkrecht zu Platten des Wärmetauscherbündels (20) des Wärmetauschers ist.

6. Sammelkasten nach einem der vorhergehenden Ansprüche, wobei der Flansch (4) eine Grenzflächenebene (22) mit einem Verbindungsteil aufweist, das die Zirkulation des ersten Fluids ermöglicht, wobei die Ebene (22) im Wesentlichen orthogonal zu dem hochstehenden Rand (7) der Eintrittsfläche (8) und/oder zu der weiteren Wand (9), welche die Anordnung (6) bildet, ausgerichtet ist.

7. Sammelkasten nach dem vorhergehenden Anspruch, wobei sich die Grenzflächenebene (22) auf der einen oder anderen Seite oder auf beiden Seiten der Verstärkungsrippe (10) erstreckt.

8. Sammelkasten nach einem der vorhergehenden Ansprüche, wobei der Flansch (4) eine Dicke aufweist, die im Wesentlichen identisch mit der Dicke der Eintrittswand (8) und/oder der anderen Wand (9) ist.

9. Sammelkasten nach einem der vorhergehenden Ansprüche, wobei sich die Verstärkungsrippe (10) auf dem hochstehenden Rand (7) der Eintrittswand (8) abstützt.

10. Sammelkasten nach einem der vorhergehenden Ansprüche, wobei der Flansch (4) einen Lötbereich zum Löten auf die Eintrittswand (8) aufweist.

11. Sammelkasten nach einem der vorhergehenden Ansprüche, wobei der Lötbereich ein sogenannter innerer Bund (25) ist, der in einen sogenannten äußeren Bund (26) der Eintrittswand (8) eingeschoben wird.

12. Wärmetauschergehäuse, welches einen Sammelkasten (1) nach einem der vorhergehenden Ansprüche umfasst.

13. Gehäuse nach Anspruch 12, welches Wände (40, 41, 42, 43) umfasst, die eine Aufnahme für das Wärmetauscherbündel (20) definieren, wobei die andere Wand oder die anderen Wände (9) des Sammelkastens (1) von einer Verlängerung (12, 13, 14, 15) gebildet werden, die an die Wände angeformt ist, die eine Aufnahme für den Wärmetauscher definieren.

14. Gehäuse nach Anspruch 13, wobei die Wände (40, 41, 42, 43, 8) durch Tiefziehen hergestellt sind.

15. Wärmetauscher, insbesondere Lufteinlassmodul eines Verbrennungsmotors, welcher ein Gehäuse (4) nach einem der Ansprüche 12 bis 14 umfasst.

## Claims

1. Heat exchanger manifold, in particular a charge air cooler of an internal combustion engine, comprising a bundle (20) for the exchange of heat between a first and a second fluid, said manifold (1) comprising a connection flange (4) for the passage of the first fluid and a casing for the circulation (5) of said first fluid between said flange (4) and said bundle for the exchange of heat (20), said casing (5) comprising an assembly (6) formed by a raised edge (7) of a wall (8), being the so-called entry wall, of said casing (5), supporting said flange (4), and at least one other wall (9) of said casing (5), **characterized in that** said flange (4) comprises a reinforcing rib (10) resting on said assembly (6) on a part of the casing exhibiting a thickness of reinforced material joining two walls of said casing.

2. Manifold according to Claim 1, in which said rib (10) is configured in order to define a throat intended to receive a seal ring (11).

3. Manifold according to any of Claims 1 or 2, in which said flange (4) is formed from a stamped part.

4. Manifold according to any of Claims 1 to 3, in which said other wall (9) is a wall of said casing (5) intended to be oriented in a plane substantially parallel to plates of the bundle for the exchange of heat (20) of said heat exchanger.

5. Manifold according to any of Claims 1 to 3, in which said other wall (9) is a raised edge (49) of a wall of said casing (5) intended to be oriented in a plane substantially perpendicular to plates of the bundle for the exchange of heat (20) of said heat exchanger.

6. Manifold according to any of the preceding claims, in which said flange (4) exhibits an interface plane (22) having a connection piece, permitting the circulation of the first fluid, said plane (22) being oriented substantially orthogonally to said raised edge (7) of the entry face (8) and/or to said other wall (9) forming the assembly (6).

7. Manifold according to the preceding claim, in which said interface plane (22) extends to either side of said reinforcing rib (10).

8. Manifold according to any of the preceding claims, in which said flange (4) exhibits a thickness that is substantially identical to the thickness of said entry wall (8) and/or of said other wall (9).

9. Manifold according to any of the preceding claims, in which said reinforcing rib (10) rests on said raised edge (7) of the entry wall (8).

10. Manifold according to any of the preceding claims, in which said flange (4) exhibits a brazing zone on said entry wall (8).

11. Manifold according to any of the preceding claims, in which said brazing zone is a collar (25), being a so-called internal collar, inserted into a collar (26), being a so-called external collar, of the entry wall (8).

12. Heat exchanger housing comprising a manifold (1) according to any of the preceding claims.

13. Housing according to Claim 12, comprising walls (40, 41, 42, 43) defining a holder for said bundle for the exchange of heat (20), said one or other walls (9) of the manifold (1) being formed by an extension (12, 13, 14, 15) derived from the material of said walls defining a housing for said exchanger.

14. Housing according to Claim 13, in which said walls (40, 41, 42, 43, 8) are realized by stamping.

15. Heat exchanger, in particular an air inlet module of an internal combustion engine, comprising a housing (4) according to any of Claims 12 to 14.
